# EUROPEAN PATENT APPLICATION

(11) **EP 3 705 448 A1**
(43) Date of publication of application: **09.09.2020**
(21) Application number: 18872077.5
(22) Date of filing: 02.02.2018
(51) Int. Cl.: B66F 7/02

(54) **VEHICLE LIFTING DEVICE FOR BATTERY SWAPPING STATION, AND CONTROL METHOD THEREFOR**

(30) Priority: 03.11.2017 CN 201711072730
(71) Applicant: NIO Nextev Limited, Central, Hong Kong (HK)
(72) Inventor: BENGTSSON, Jan, Hong Kong (CN); LI, Nan, Hong Kong (CN); TIAN, Xiaotao, Hong Kong (CN); DING, Xikun, Hong Kong (CN); MA, Yongyue, Hong Kong (CN)
(74) Representative: Vossius & Partner Patentanwälte Rechtsanwälte mbB
(86) International application number: PCT/CN2018/075145
(87) International publication number: WO 2019/085317

(57) **Abstract**

Disclosed are a vehicle hoisting device (20) for a battery swap station (10), and a control method. The vehicle hoisting device comprises a first lifting beam assembly (25a) and a second lifting beam assembly (25b) which are respectively installed between a first set of columns (23a, 23d) and between a second set of columns (23b, 23c), and are able to move up and down in a height direction, wherein a first height measurement component (24a) installed on at least one column of the first set of columns (23a, 23d), and used for measuring a current first height value of the first lifting beam assembly (25a) in real time and feeding the value back to a control component (29); and a second height measurement component (24b) installed on at least one column of the second set of columns (23b, 23c), and used for measuring a current second height value of the second lifting beam assembly (25b) in real time and feeding the value back to the control component (29), thereby accurately determining whether the vehicle (900) is tilting, which aids in timely avoiding continuing to lift or lower the vehicle (900) when the vehicle is tilting, which causes safety problems.

## Description

### Technical Field

The invention belongs to the technical field of traction battery swapping for vehicles, relates to a battery swap station, and particularly relates to a vehicle hoisting device for a battery swap station and a control method for the vehicle hoisting device.

### Background Art

In order to adapt to environmental protection and energy crises, new energy vehicles (for example, electric vehicles) are becoming more and more common. One very important direction of development in the existing new energy vehicles is a new energy vehicle of a battery swap type, which is able to significantly shorten energy supply time compared with a new energy vehicle of a plug-in and charge type.

Corresponding battery swap stations (or known as "battery swap systems") need to be established in order to facilitate vehicle users in swapping batteries. Since manual battery swap efficiency is too low to suit industrial application in a battery swap station, in order to realize fast and highly efficient automated battery swapping, a vehicle position adjustment system needs to be provided in the battery swap station to move a vehicle needing to swap a battery to a target position suitable for swapping the battery, and then a battery swap apparatus (for example, a battery swap trolley used for loading a traction battery pack) is used for automated battery swapping.

Since traction batteries in electric vehicles are usually installed at an approximate chassis position, in order to facilitate the battery swap apparatus in performing a battery swap operation, in a battery swap process firstly the vehicle needs to be lifted to a certain height. Owing to this, the vehicle position adjustment system of the battery swap station usually comprises a vehicle hoisting device or it is realized as the vehicle hoisting device.

The lifting precision of the vehicle hoisting device directly influences the positioning accuracy of the vehicle, thus influencing the subsequent automated battery swap operation process; and the lifting precision of the vehicle hoisting device also influences safety in the battery swap process, for example, if the lifting height is inconsistent, the vehicle will tilt, easily causing major safety problems such as the vehicle rolling off.

### Summary of the Invention

One of the objectives of the invention is to timely learn whether a vehicle hoisting device is tilting in the process of lifting or lowering a vehicle.

Another objective of the invention is to improve the safety of the vehicle hoisting device.

To realize the objectives above or other objectives, the invention provides the technical solutions as follows.

According to a first aspect of the invention, provided is a vehicle hoisting device for a battery swap station, the vehicle hoisting device comprising:
a first set of columns and a second set of columns,
a first lifting beam assembly installed between the first set of columns and able to move up and down relative to the first set of columns in a height direction,
a second lifting beam assembly installed between the second set of columns and able to move up and down relative to the second set of columns in the height direction, and
an AC motor for driving the upward and downward movements of the first lifting beam assembly and the second lifting beam assembly, and a control component for the AC motor,
wherein two sides of a vehicle being lifted are respectively placed on the first lifting beam assembly and the second lifting beam assembly;
and further comprising:
   a first height measurement component installed on at least one column of the first set of columns, and used for measuring a current first height value of the first lifting beam assembly in real time and feeding the value back to the control component; and
   a second height measurement component installed on at least one column of the second set of columns, and used for measuring a current second height value of the second lifting beam assembly in real time and feeding the value back to the control component.

In a vehicle hoisting device according to an embodiment of the invention, the control component comprises:
a comparison module for comparing the first height value fed back by the first height measurement component and the second height value fed back by the second height measurement component to determine a difference value therebetween; and
a tilt determination module for determining that the vehicle has tilted in the process of lifting or lowering when the difference value is greater than or equal to a tolerance value.

In a vehicle hoisting device according to an embodiment of the invention, the control component is further configured to send an instruction, when determining that tilting has occurred, to trigger the AC motor to brake and/or trigger an anti-falling mechanism to perform an anti-falling action.

In a vehicle hoisting device according to an embodiment of the invention, a ratchet corresponding to the anti-falling mechanism is provided on the columns; and the anti-falling mechanism comprises:
a pedestal able to move up and down relative to the columns in the height direction;
a first pawl installed on the pedestal via a first shaft and able to rotate relative to the first shaft; and
an electromagnetic actuating component fixedly installed on the pedestal, with an output shaft thereof abutting against a face of the first pawl facing away from the ratchet.

In a vehicle hoisting device according to an embodiment of the invention, the electromagnetic actuating component drives the output shaft thereof to extend when an anti-falling instruction is received, thereby pushing a lower end of the first pawl to rotate towards the ratchet until the first pawl catches the ratchet.

In a vehicle hoisting device according to an embodiment of the invention, further comprised is an anti-falling mechanism provided in front of the columns and the corresponding first lifting beam assembly or second lifting beam assembly, wherein a ratchet corresponding to the anti-falling mechanism is provided on the columns; and the anti-falling mechanism comprises:
a pedestal able to move up and down relative to the columns in the height direction;
a second pawl installed on the pedestal via a second shaft and able to rotate relative to the second shaft, with an upper end of the second pawl being pulled by a suspension chain in a normal state; and
an elastic component installed on the pedestal and, in the normal state, able to output a resilient force to a face of a lower end of the second pawl facing away from the ratchet.

In a vehicle hoisting device according to an embodiment of the invention, in an abnormal state where the suspension chain breaks, the resilient force of the elastic component pushes the lower end of the second pawl to rotate towards the ratchet until the second pawl catches the ratchet.

In a vehicle hoisting device according to an embodiment of the invention, either of the first height measurement component and the second height measurement component is used to control a lifting or lowering height of the first lifting beam assembly and the second lifting beam assembly.

In a vehicle hoisting device according to an embodiment of the invention, further comprised is a protection grating for detecting whether a person has entered the vehicle hoisting device.

In a vehicle hoisting device according to an embodiment of the invention, the first height measurement component and the second height measurement component are encoder scales.

According to another aspect of the invention, provided is a battery swap station, comprising any one of the vehicle hoisting devices described above.

According to a further aspect of the invention, further provided is a control method for one of the vehicle hoisting devices described above, the control method comprising steps of:
comparing the first height value fed back by the first height measurement component and the second height value fed back by the second height measurement component to determine a difference value therebetween; and
determining that the vehicle has tilted in the process of lifting or lowering when the difference value is greater than or equal to a tolerance value.

In a control method according to an embodiment of the invention, further comprised is a step of:
when determining that tilting has occurred, triggering the AC motor to brake and/or triggering an anti-falling mechanism to perform an anti-falling action.

In a control method according to an embodiment of the invention, further comprised is a step of:
when determining that a person has entered the vehicle hoisting device, triggering an anti-falling mechanism to perform an anti-falling action.

In a control method according to an embodiment of the invention, further comprised is a parameter setting step for setting the tolerance value.

The foregoing features and operations of the invention will become more obvious according to the following descriptions and the accompanying drawings.

### Brief Description of the Drawings

The above-mentioned and other objectives and advantages of the invention will be more thorough and clearer from the following detailed description in conjunction with the drawings, wherein the same or similar elements are represented by the same numerals.
Fig. 1 is a schematic structural diagram of a battery swap station according to an embodiment of the invention.
Fig. 2 is a schematic structural diagram of a vehicle hoisting device according to an embodiment of the invention.
Fig. 3 is an exploded diagram of the vehicle hoisting device of the embodiment shown in Fig. 2.
Fig. 4 is a partial schematic structural diagram of a column with a height measurement device installed in the vehicle hoisting device of the embodiment shown in Figs. 2 and 3.
Fig. 5 is a schematic structural diagram of a module of a vehicle hoisting device according to an embodiment of the invention.
Fig. 6 is a partial schematic structural diagram of a column with an anti-falling mechanism installed in the vehicle hoisting device of the embodiment shown in Figs. 2 and 3.
Fig. 7 shows the process of an anti-falling action of the anti-falling mechanism shown in Fig. 6, wherein Fig. 7(a) shows a state where an anti-falling function is activated but the anti-falling action has not yet been performed; and Fig. 7(b) shows a state after the anti-falling action is performed.
Fig. 8 is a flow chart of a control method for a vehicle hoisting device according to an embodiment of the invention.

### Detailed Description of Embodiments

The invention will be more completely described with reference to the accompanying drawings. Exemplary embodiments of the invention are shown in the accompanying drawings. However, the invention may be implemented in many different forms and should not be construed as being limited to the embodiments set forth herein. On the contrary, these embodiments are provided to make the disclosure thorough and complete and fully pass on the concept of the invention to those skilled in the art. In the drawings, the same numerals indicate the same elements or components, and thus description of these is omitted.

In this document, "vehicle" refers to a battery electric vehicle or a hybrid vehicle using a traction battery to at least partially provide drive. A traction battery of a vehicle is installed, for example, at an approximate position of a chassis of the vehicle, thus if a battery swap operation needs to be conveniently performed, a vehicle hoisting device 20 of an embodiment of the invention needs to be used to lift the vehicle, and of course, the vehicle hoisting device 20 is also able to lower the vehicle.

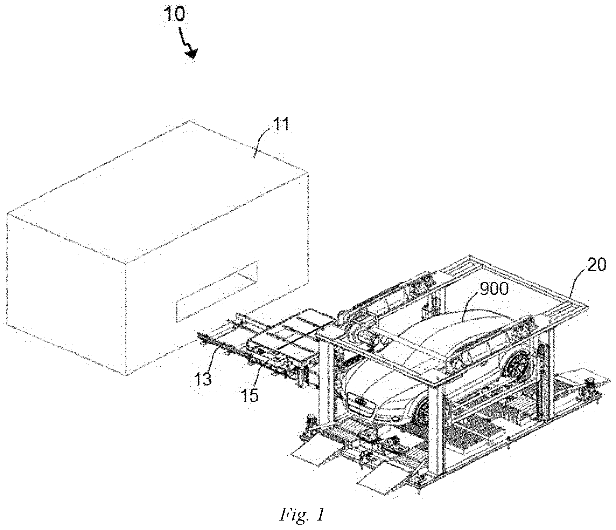

The vehicle hoisting device 20 of an embodiment of the invention is used in a battery swap station to construct a battery swap station 10 shown in Fig. 1. The battery swap station 10 mainly comprises a battery storage 11, a vehicle hoisting device 20, a track rail 13 provided in the battery storage 11 and the vehicle hoisting device 20, and a battery swap trolley 15 traveling on the track rail 13. When performing a battery swap operation, the vehicle hoisting device 20 needs to lift a vehicle 900 to a preset height, under the vehicle 900 the battery swap trolley 15 removes a traction battery needing to be exchanged from a chassis of the vehicle, then conveys a fully charged traction battery from the battery storage 11 to an area below the vehicle 900, and after the traction battery is aligned to a traction battery installation position of the vehicle 900, performs automated installation.

The battery swap station 10 of the embodiment above does not require operating personnel to enter an area around the vehicle 900 in a battery swap process, ensuring battery swap safety, for example, personnel may be prohibited from entering the area where the vehicle hoisting device 20 is located.

In the embodiment of the invention, the main function of the vehicle hoisting device 20 is lifting the vehicle 900 to a preset position. However, it shall be understood that the vehicle hoisting device 20 is also able to position the vehicle 900 at a position on a horizontal plane in a perpendicular height direction, but specific description of this function is omitted below.

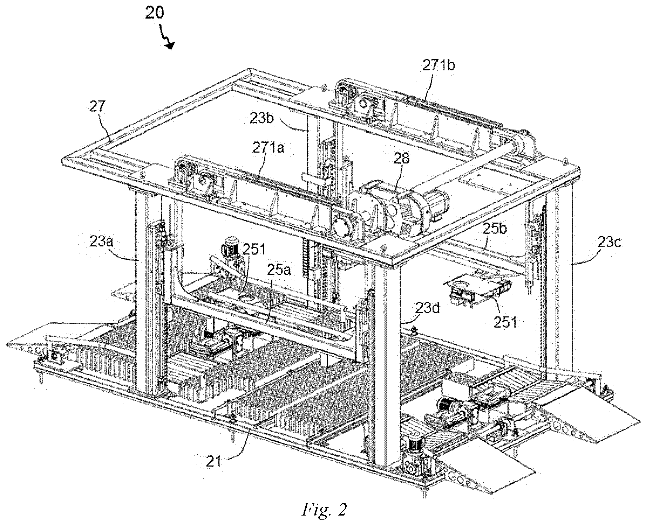

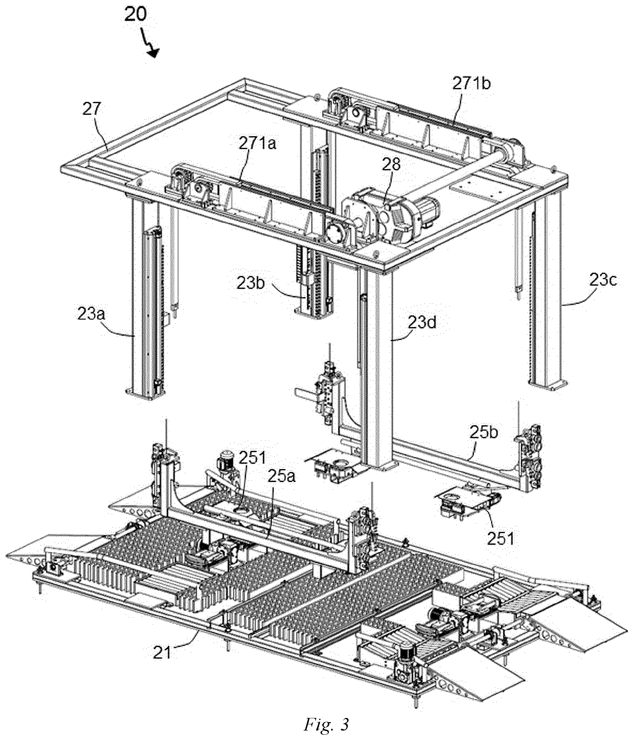

As shown in Figs. 2 and 3, the vehicle hoisting device 20 of the embodiment of the invention is a column-type hoisting device, using a plurality of columns 23, for example, four columns 23a, 23b, 23c and 23d distributed in a square. An operation platform 21 is provided in the vehicle hoisting device 20, and the four columns 23a, 23b, 23c and 23d are fixedly installed on the operation platform 21.

According to needs, the columns 23a and 23d are able to be provided as a set of columns, and the columns 23b and 23c provided as another set of columns. Each set of columns is correspondingly provided with a lifting beam assembly 25 of the vehicle hoisting device 20, for example, a lifting beam assembly 25a is installed between the column 23a and the column 23d, and a lifting beam assembly 25b is installed between the column 23b and the column 23c. The lifting beam assembly 25a and the lifting beam assembly 25b are arranged substantially parallel to the horizontal, and prior to lifting, a vehicle to be lifted 200 is moved onto the lifting beam assembly 25, and two sides of the vehicle 200 (for example, left and right sides) are respectively placed on the lifting beam assembly 25a and the lifting beam assembly 25b. In the process of lifting or lowering, the lifting beam assembly 25a is able to move up and down in the height direction relative to the columns 23a and 23d, and the lifting beam assembly 25b is able to move up and down in the height direction relative to the columns 23b and 23c, whereby the vehicle 200 is able to move up and down in the height direction along with the lifting beam assemblies 25a and 25b, and when the lifting beam assemblies 25a and 25b stop moving, the vehicle is positioned at a certain height position.

In an embodiment, the lifting beam assemblies 25a and 25b are respectively provided with two support arms 251, the support arms 251 of each lifting beam assembly 25 extending inwards, and four wheels of the vehicle 200 are able to be positioned on the four support arms 251. Each support arm 251 is correspondingly provided with a motor, thereby enabling position adjustment of the vehicle 200 to be realized on a horizontal plane.

Taking into account the considerable weight of the vehicle 200, in an embodiment of the invention, an AC motor 28 is selected as a power component. The AC motor 28 may specifically be a three-phase AC motor, and a corresponding type of the AC motor 28 can be selected and configured according to specific needs. The corresponding AC motor 28 is provided with a control component 29, and the control component 29 is used for controlling the running of the motor 28, even including a brake action and a brake release action of the motor 28. In this way, the AC motor 28 and the control component 29 principally constitute a motive power system, and they are able to drive the upward and downward movements of the lifting beam assembly 25a and the lifting beam assembly 25b. The control component 29 can specifically be realized, for example, by means of a PLC, and can be modularized and installed in a corresponding AC motor 28.

Continuing with what is shown in Figs. 2 and 3, the motive power system can be installed on a top platform 27 supported by the columns 23a, 23b, 23c and 23d. The top platform 27 can comprise cross beams (for example, a beam between the columns 23a and 23b, and a beam between the columns 23c and 23d) and longitudinal beams (for example, a beam between the columns 23a and 23d, and a beam between the columns 23b and 23c). Where a chain is used for transmission, top lifting chains 29a and 29b are respectively provided on two longitudinal beams on the top platform 27, wherein the top lifting chain 29a is able to transfer motive power output by the AC motor 28 to the lifting beam assembly 25a, thereby driving the lifting beam assembly 25a to move up and down in the height direction along the columns 23a and 23d, and the top lifting chain 29b is able to transfer motive power output by the AC motor 28 to the lifting beam assembly 25b, thereby driving the lifting beam assembly 25b to move up and down in the height direction along the columns 23b and 23c.

In an embodiment, the lifting beam assembly 25a and the lifting beam assembly 25b use the same AC motor 28 for synchronous driving, that is, the top lifting chains 29a and 29b are synchronously driven by the same AC motor 28. In another alternative embodiment, the top lifting chains 29a and 29b use different AC motors 28 for synchronous driving, for example, two synchronously controlled AC motors 28.

Continuing with what is shown in Figs. 2 and 3, corresponding track rails can be provided on the columns 23a, 23b, 23c and 23d, and the lifting beam assembly 25a and the lifting beam assembly 25b are able to respectively travel along the respective track rail on the columns 23.

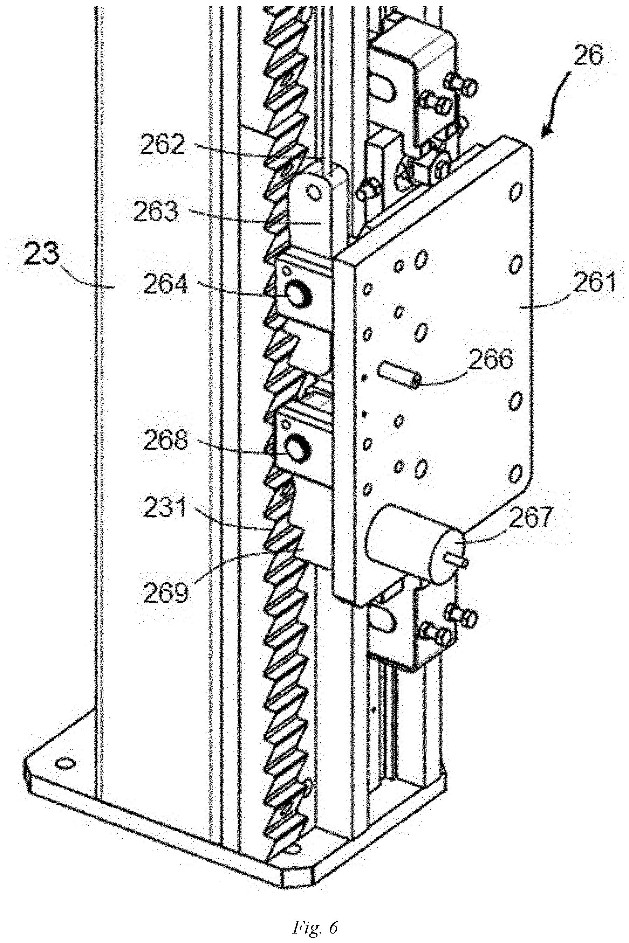

As shown in Fig. 2 to Fig. 5, the vehicle hoisting device 20 further comprises a height measurement component 24 installed on the columns 23. The height measurement component 24 comprises a height measurement component measure 24a installed on at least one of the column 23a and column 23d, used for real time measurement of a current first height value of the lifting beam assembly 25a and feeding the value back to a control component 25 (as shown in Fig. 6); and the height measurement component 24 further comprises a height measurement component measure 24b installed on at least one of the column 23b and column 23c, used for real time measurement of a current second height value of the lifting beam assembly 25b and feeding the value back to the control component 25 (as shown in Fig. 6).

In view of the beam-type structure of the lifting beam assembly 25a, it is entirely synchronously lifted or lowered, such that a height measurement component 24 provided on one of the column 23a and column 23d can measure the height of the lifting beam assembly 25a, and in the same way, a height measurement component 24 provided on one of the column 23b and column 23c can measure the height of the lifting beam assembly 25b. Of course, a corresponding height measurement component 24 can be provided on each column 25 according to needs.

It should be noted that two height measurement components 24, for example, the height measurement component measure 24a and the height measurement component measure 24b, can be diagonally installed on different columns, for example, respectively installed on the column 23a and column 23c of the columns 23a, 23b, 23c and 23d or respectively installed on the column 23b and column 23d of the columns 23a, 23b, 23c and 23d. In this way, the height values respectively sensed by the two height measurement components 24 can best embody the imbalance of the lifted vehicle 200.

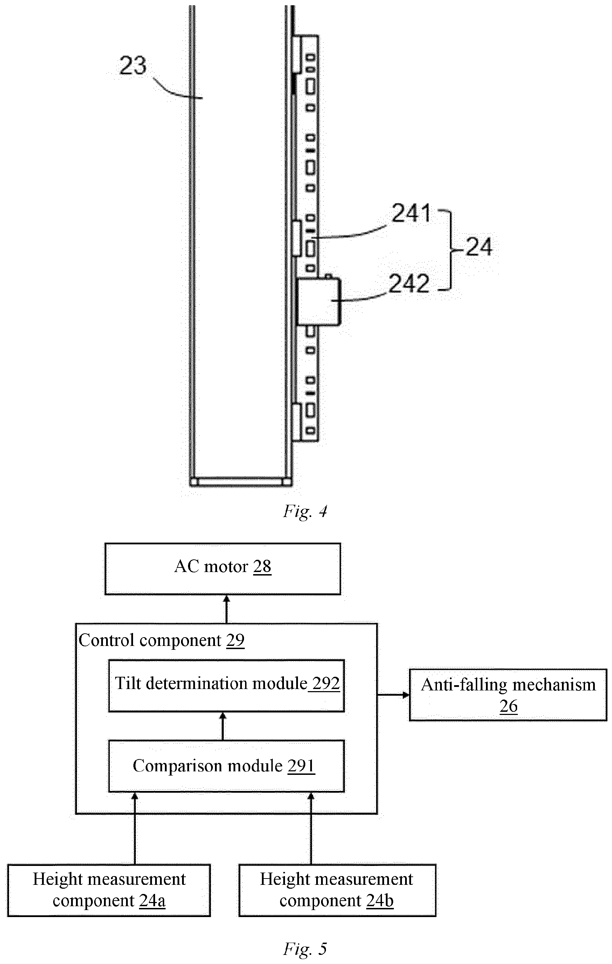

Each height measurement component 24 can be additionally installed between the corresponding column 23 and one end of the corresponding lifting beam assembly 25. In an embodiment, as shown in Fig. 4, the height measurement component 24 is realized by means of an encoder scale, which comprises a scale member 241 installed on the column 23 and an encoder 242 moving up and down together with the lifting beam assembly 25. In the process of lifting or lowering, the encoder 242 can detect an amount of displacement of the lifting beam assembly 25 relative to the fixed scale member 241, i.e. reading a first height value or a second height value, and sends the height value in the form of a feedback signal to a comparison module 291 of the control component 29 as shown in Fig. 5. The scale member 241 is specifically a linear scale member installed in the height direction.

The control component 29 of the AC motor 28 is able to control the lifting height of the lifting beam assemblies 25a and 25b by means of any one of the height measurement components 24. Taking the control component 29 controlling a lifting process as an example, in the lifting process, assuming that the lifting height is controlled based on the height measurement component measure 24a corresponding to the lifting beam assembly 25a, the control component 29 will emit an instruction of the need to lift the lifting beam assemblies 25a and 25b to a certain preset height (the preset height can be the final height needed for lifting and can also be a height at a certain moment in the lifting process) to the AC motor 28, the AC motor 28, based on the instruction, synchronously drives the lifting beam assemblies 25a and 25b to lift by means of the top lifting chains 29a and 29b. At the same time, the height measurement component measure 24a feeds back the measured current first height value, the comparison module 291 of the control component 29 can compare the first height value and the preset height corresponding to the instruction, and if there is a deviation between the two, the control component 29 can control an execution component (for example, the AC motor 28) to move in the direction of eliminating the deviation until the deviation is substantially equal to zero or the deviation is substantially eliminated. Therefore, relative precision control of the lifting height of the vehicle 900 can be achieved. In particular, when the height measurement component 24 is the encoder scale, the height value fed back is more accurate so the accuracy of the lifting height is better.

It shall be understood that in other embodiments, the lifting height can be controlled based on the height measurement component measure 24b corresponding to the lifting beam assembly 25b.

It should be noted that although the height values measured by the height measurement component measure 24a or the height measurement component measure 24b are fed back to the control component 29 to control the lifting height, since problems exist such as deviation in operating mechanisms and inaccuracy in synchronous transfer, these may lead to the current height of the lifting beam assembly 25a and the lifting beam assembly 25b being inconsistent in the process of lifting or lowering, so the problem of imbalance of the vehicle 200 may exist.

To detect imbalance of the vehicle 200 in the process of lifting or lowering, and prevent the vehicle 200 from tilting excessively, the second height value measured by the height measurement component measure 24b of the height measurement component 24 can serve as a height feedback signal of the first height value measured by the height measurement component measure 24a, that is to say, the second height value corresponding to the lifting beam assembly 25b serves as the feedback signal of the first height value corresponding to the lifting beam assembly 25a. In another embodiment, the first height value measured by the height measurement component measure 24a of the height measurement component 24 can serve as a height feedback signal of the second height value measured by the height measurement component measure 24b, that is to say, the first height value corresponding to the lifting beam assembly 25a serves as the feedback signal of the second height value corresponding to the lifting beam assembly 25b. The measurement of the height measurement component measure 24a and the measurement of the height measurement component measure 24b can mutually serve as a feedback detection component of the other party.

Continuing with what is shown in Fig. 5, the first height value and the second height value of the measurement of the height measurement component measure 24a and the measurement of the height measurement component measure 24b at the same moment are fed back to the comparison module 291 of the control component 29, and the comparison module 291 is used for comparing the first height value and the second height value to determine a difference value therebetween. Furthermore, a tilt determination module 292 is also provided in the control component 29, and the tilt determination module 292 is used for determining that the vehicle 200 has tilted in the process of lifting or lowering when the difference value is greater than or equal to a tolerance value. The tolerance value can be preset, for example, manually set by means of a person, the tolerance value reflects the balance requirements of the vehicle 200 in the process of lifting or lowering, and the specific size of the tolerance value is not restrictive. In this way, the control component 29 can monitor in real time whether the vehicle 200 is tilting in the process of lifting or lowering, aiding in timely averting danger in the battery swap process.

In an embodiment, the control component 29 is further configured to send an instruction, when determining that tilting has occurred, to trigger the AC motor 28 to perform a brake action. As an example, when the tilt determination module 292 determines that tilting has occurred, the control component 29 sends a brake instruction, and the AC motor 28 accordingly and timely performs a brake action, pausing or stopping the output of motive power.

Continuing with what is shown in Figs. 5 and 6, in an embodiment, the vehicle hoisting device 20 is further provided with an anti-falling mechanism 26 located between the column 23 and one end of the corresponding lifting beam assembly 25, and the anti-falling mechanism 26 can be controlled to execute an anti-falling action to prevent the vehicle 200 being lifted from falling, effectively improving safety.

In an embodiment, the control component 29 is further configured to send an instruction, when determining that tilting has occurred, to trigger the anti-falling mechanism 26 to perform an anti-falling action. As an example, when the tilt determination module 292 determines that tilting has occurred, the control component 29 sends an anti-falling instruction, and the anti-falling mechanism 26 accordingly and timely performs an anti-falling action, pausing or stopping the lifting/lowering process.

It shall be understood that when determining that tilting has occurred, the control component 29 can simultaneously send the above-mentioned brake instruction and anti-falling instruction, and the brake action and the anti-falling action are performed simultaneously, effectively guaranteeing safety.

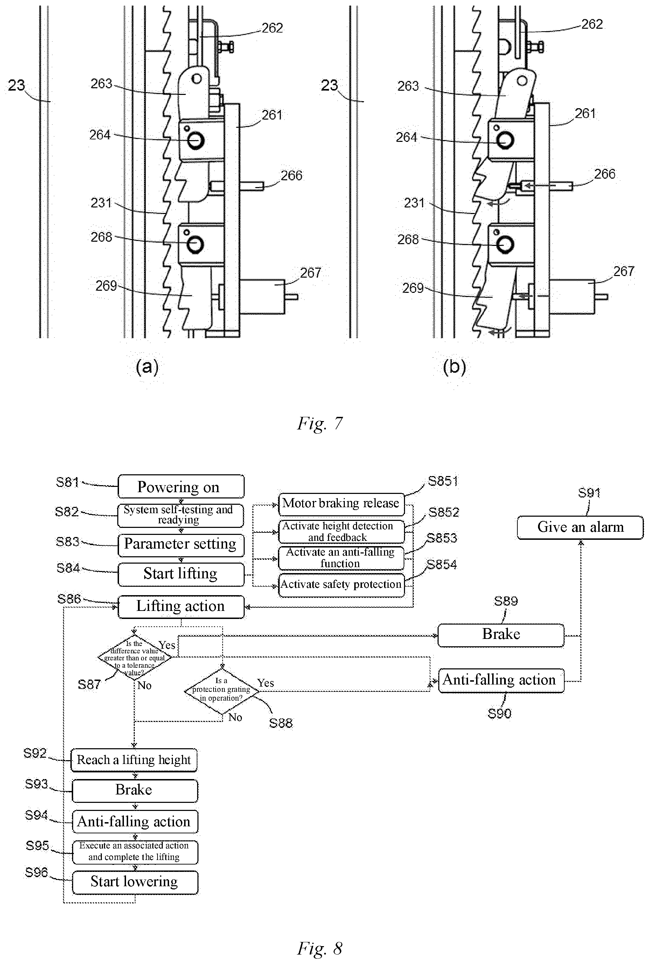

In an embodiment, as shown in Figs. 6 and 7, the anti-falling mechanism 26 comprises a pedestal 261, wherein the pedestal 261 can be fixedly installed at one end of the lifting beam assembly 25, and can move up and down along with the lifting beam assembly 25. When the lifting beam assembly 25 is lifted, a top lifting chains 29 act with a suspension chain 262, and the pedestal 261 is driven to move up and down along the columns 23 by means of the suspension chain 262.

Specifically, the anti-falling mechanism 26 further comprises a ratchet 231 provided on the columns 23 and facing the pedestal 261. A pawl 263, corresponding to the ratchet 231, is provided, the pawl 263 is installed on the pedestal 261 via a shaft 264, and the pawl 263 can rotate around the shaft 264. In a normal state, the suspension chain 262 is connected to an upper end of the pawl 263, making the pawl 263 in a pulled state, i.e. the initial state shown in Fig. 7(a). At this point, a lower end of the pawl 263 is separated from the ratchet 231, and does not affect the upward and downward movements of the pedestal 261, while a back face of the lower end of the pawl 263 is correspondingly provided with an elastic component 266, which, in the initial state shown in Fig. 7(a), is pressed onto the pedestal 261 by the pawl 263.

If a transmission chain breaks in the lifting or lowering process, for example, the suspension chain 262 breaks, as shown in Fig. 7(b), the pawl 263 disengages from the suspension chain 262 and is in a free state relative to the suspension chain 262, that is, not pulled by the suspension chain 262. In this way, the lower end of the pawl 263 rotates around the shaft 264 in the direction shown in Fig. 7(b) under the elastic force of the elastic component 266, and the pawl 263 catches the ratchet 231, thereby blocking the pedestal 261 and the lifting beam assembly 25 fixedly connected thereto from falling downwards, and preventing a falling accident occurring with the vehicle 200.

In an embodiment, as shown in Figs. 6 and 7, the corresponding ratchet 231 can further be provided with a pawl 269, the pawl 269 being installed on the pedestal 261 via a shaft 268, and the pawl 269 can rotate around the shaft 268. A face corresponding to a lower end of the pawl 269 and opposite the ratchet 231 (i.e. a back face) is provided with an electromagnetic actuating component 267, wherein the electromagnetic actuating component 267 can be fixedly installed on the pedestal 261, with an output shaft thereof abutting against the back face of the lower end of the pawl 269. In a normal state, as shown in Fig. 7(a), the output shaft of the electromagnetic actuating component 267 retracts, the lower end of the pawl 269 is separated from the ratchet 231 and does not affect the upward and downward movements of the pedestal 261.

The electromagnetic actuating component 267 can be coupled with the control component 29 as shown in Figs. 2 and 5, and receive the anti-falling instruction from the control component 29. When the anti-falling instruction is received, the electromagnetic actuating component 267 drives the output shaft to extend, as shown in Fig. 7(b), pushing the lower end of the pawl 269 to rotate towards the ratchet 231, and the pawl 269 catches the ratchet 231, thereby blocking the pedestal 261 and the lifting beam assembly 25 fixedly connected thereto from moving relative to the columns 23, and while blocking the vehicle 200 from continuing to be lifted or lowered, preventing a falling accident occurring with the vehicle 200 due to tilting.

It shall be understood that the electromagnetic actuating component 267 can also receive an anti-falling instruction from other components, and an anti-falling action similar to the above is executed by means of the electromagnetic actuating component 267 and the pawl 269.

As an example, for safety protection in a battery swap process, personnel are prohibited from entering a battery swap zone in an automated battery swap process. Therefore, a protection grating (not shown in the figures) is provided around the vehicle hoisting device 20 (for example, on the columns 23 or next to them). If personnel enter the battery swap zone, firstly the protection grating detects the entry, the protection grating is triggered to send an anti-falling instruction to the electromagnetic actuating component 267, and the pedestal 261 and the lifting beam assembly 25 fixedly connected thereto can be locked by means of the electromagnetic actuating component 267 and the pawl 269, preventing the personnel entering and a safety incident occurring.

Therefore, the vehicle hoisting device 20 is further improved in terms of the safety of the battery swap process.

A control method for the vehicle hoisting device 20 according to the above embodiments of the invention is described below also in view of Fig. 8, taking the battery swap operation process as an example.

Firstly, in step S81, the motive power system, such as the AC motor 28, is powered on.

Next, in step S82, a battery swap station system (comprising the vehicle hoisting device) performs self-testing and is readied.

Next, in step S83, setting parameters, such as the tolerance value, is performed.

Next, in step S84, lifting is started. At this point, it indicates that the lifting action is already readied.

Next, in step S851, the braking of the motor 28 of the motive power system is released. Corresponding to this step, step S852, step S853 and step S854 can be selected according to needs to activate a corresponding safety function. As an example, in step S852, height detection and feedback is activated, the height measurement component 24 is readied; as another example, in step S853, an anti-falling function is activated, and the anti-falling mechanism 26 (for example, the electromagnetic actuating component 267) is readied; and as yet another example, in step S854, safety protection is activated, and the protection grating is readied.

Next, in step S85, under the control of the control module 29, the AC motor 28 outputs motive power to perform the lifting action. In the lifting process, the lifting height can be controlled by means of any one of the height measurement components 24, thereby controlling the lifting precision or accuracy.

In an embodiment, in this step, since the height detection and feedback is activated, the height measurement components 24a and 24b will respectively detect a first height value and a second height value in real time, and feed the values back to the control component 29.

In an embodiment, in this step, since safety protection is activated, the protection grating also detects in real time and feeds back corresponding data or instruction.

Next, in step S87, the first height value fed back by the height measurement component 24a is compared with the second height value fed back by the height measurement component 24b to determine a difference value therebetween, and judge whether the difference value is greater than or equal to a tolerance value.

If "no", this indicates that the lifting beam assembly 25a and the lifting beam assembly 25b are indeed synchronously lifting, and the vehicle 200 is not tilting, and the lifting action is maintained until step S92, where the lifting height is reached.

If "yes", this indicates that the lifting beam assembly 25a and the lifting beam assembly 25b are currently not synchronously lifting, and the vehicle 200 is tilting. On the one hand, a brake instruction can be sent by the control component 29 for the AC motor 28 to perform a brake action, i.e. step S89, and on the other hand, the control component 29 can send an anti-falling instruction to perform an anti-falling action, i.e. step S90, for example, the electromagnetic actuating component 267 drives the output shaft to extend, as shown in Fig. 7(b), pushing the lower end of the pawl 269 to rotate towards the ratchet 231, and the pawl 269 catches the ratchet 231, thereby blocking the pedestal 261 and the lifting beam assembly 25 fixedly connected thereto from moving relative to the columns 23, and preventing the vehicle 200 from continuing to be lifted.

In an embodiment, step S88 is also executed at the same time as executing step S87, judging whether the protection grating is in operation.

If "no", this indicates that in the process of the lifting action, no person has entered the battery swap zone, the lifting action can be maintained until step S92, where the lifting height is reached.

If "yes", the protection grating can send an anti-falling instruction to perform an anti-falling action, i.e. step S90, for example, the electromagnetic actuating component 267 drives the output shaft to extend, as shown in Fig. 7(b), pushing the lower end of the pawl 269 to rotate towards the ratchet 231, and the pawl 269 catches the ratchet 231, thereby blocking the pedestal 261 and the lifting beam assembly 25 fixedly connected thereto from moving relative to the columns 23, and preventing the vehicle 200 from continuing to be lifted.

In an embodiment, if step S87 and step S88 are judged to be "yes", an alarm can be given in both cases, i.e. step S91, thereby facilitating operating personnel in timely acquiring and responding to the alarm to perform a corresponding operation or action.

After step S92, braking of the AC motor 28 can be performed, i.e. step S93, and an anti-falling action is performed, i.e. step S94. In this way, the vehicle 200 is safely lifted to a corresponding height, an associated action is executed and lifting is completed, i.e. step S95. At this point, a traction battery swap operation can be performed by means of a battery swap trolley 15.

After the traction battery swap operation has been completed, for example, it proceeds to step S96, i.e. a step for starting to lower. It should be noted that the lowering process and the lifting process are reverse processes; however, the same or a similar method to the lifting process can be used, thereby guaranteeing safety of the lowering process, for example, similarly executing steps S87 to S95, which will not be repeated here.

It should be noted that some block diagrams shown in Fig. 5 are functional entities and do not necessarily correspond to physical or logical independent entities. These functional entities may be implemented as software, one or more hardware modules or integrated circuits, or different networks and/or processor apparatuses and/or microcontroller apparatuses.

In the solutions of the embodiments of the invention, by means of providing a first height measurement component and a second height measurement component installed on different columns corresponding to different lifting beam assemblies, wherein the height value measured by one height measurement component is able to serve as a feedback value for the height value measured by the other height measurement component, whether the heights of different lifting beam assemblies are consistent can be accurately determined in an automated manner, thereby accurately determining whether the vehicle is tilting, which aids in timely avoiding continuing to lift or lower the vehicle when the vehicle is tilting, which causes safety problems, and thus the vehicle lifting or lowering process is safer.

The examples above principally describe the vehicle hoisting device and the control method thereof, and the battery swap station using the vehicle hoisting device in the invention. Although only some embodiments of the invention are described, it will be appreciated by those skilled in the art that the invention may be embodied in many other forms without departing from the essence and scope thereof. Therefore, the presented examples and implementation manners are regarded to be schematic rather than limitative, and without departing from the spirit and scope of the invention that are defined by the appended claims, the invention may cover various changes and replacements.

## Claims

1. A vehicle hoisting device for a battery swap station, the vehicle hoisting device comprising:
a first set of columns and a second set of columns,
a first lifting beam assembly installed between the first set of columns and able to move up and down relative to the first set of columns in a height direction,
a second lifting beam assembly installed between the second set of columns and able to move up and down relative to the second set of columns in the height direction, and
an AC motor for driving the upward and downward movements of the first lifting beam assembly and the second lifting beam assembly, and a control component for the AC motor,
wherein two sides of a vehicle being lifted are respectively placed on the first lifting beam assembly and the second lifting beam assembly;
**characterized by** further comprising:
a first height measurement component installed on at least one column of the first set of columns, and used for measuring a current first height value of the first lifting beam assembly in real time and feeding the value back to the control component; and
a second height measurement component installed on at least one column of the second set of columns, and used for measuring a current second height value of the second lifting beam assembly in real time and feeding the value back to the control component.

2. The vehicle hoisting device according to claim 1, **characterized in that** the control component comprises:
a comparison module for comparing the first height value fed back by the first height measurement component and the second height value fed back by the second height measurement component to determine a difference value therebetween; and
a tilt determination module for determining that the vehicle has tilted in the process of lifting or lowering when the difference value is greater than or equal to a tolerance value.

3. The vehicle hoisting device according to claim 1 or 2, **characterized in that** the control component is further configured to send an instruction, when determining that tilting has occurred, to trigger the AC motor to brake and/or trigger an anti-falling mechanism to perform an anti-falling action.

4. The vehicle hoisting device according to claim 3, **characterized in that** a ratchet corresponding to the anti-falling mechanism is provided on the columns; and the anti-falling mechanism comprises:
a pedestal able to move up and down relative to the columns in the height direction;
a first pawl installed on the pedestal via a first shaft and able to rotate relative to the first shaft; and
an electromagnetic actuating component fixedly installed on the pedestal, with an output shaft thereof abutting against a face of the first pawl facing away from the ratchet.

5. The vehicle hoisting device according to claim 4, **characterized in that** the electromagnetic actuating component drives the output shaft thereof to extend when an anti-falling instruction is received, thereby pushing a lower end of the first pawl to rotate towards the ratchet until the first pawl catches the ratchet.

6. The vehicle hoisting device according to claim 1, **characterized by** further comprising an anti-falling mechanism provided in front of the columns and the corresponding first lifting beam assembly or second lifting beam assembly, wherein a ratchet corresponding to the anti-falling mechanism is provided on the columns; and the anti-falling mechanism comprises:
a pedestal able to move up and down relative to the columns in the height direction;
a second pawl installed on the pedestal via a second shaft and able to rotate relative to the second shaft, with an upper end of the second pawl being pulled by a suspension chain in a normal state; and
an elastic component installed on the pedestal and, in the normal state, able to output a resilient force to a face of a lower end of the second pawl facing away from the ratchet.

7. The vehicle hoisting device according to claim 6, **characterized in that** in an abnormal state where the suspension chain breaks, the resilient force of the elastic component pushes the lower end of the second pawl to rotate towards the ratchet until the second pawl catches the ratchet.

8. The vehicle hoisting device according to claim 1, **characterized in that** either of the first height measurement component and the second height measurement component is used to control a lifting or lowering height of the first lifting beam assembly and the second lifting beam assembly.

9. The vehicle hoisting device according to claim 1, **characterized by** further comprising a protection grating for detecting whether a person has entered the vehicle hoisting device.

10. The vehicle hoisting device according to claim 1, **characterized in that** the first height measurement component and the second height measurement component are encoder scales.

11. A battery swap station, **characterized by** comprising a vehicle hoisting device according to any one of claims 1 to 10.

12. A control method for a vehicle hoisting device according to claim 1, **characterized by** comprising steps of:
comparing the first height value fed back by the first height measurement component and the second height value fed back by the second height measurement component to determine a difference value therebetween; and
determining that the vehicle has tilted in the process of lifting or lowering when the difference value is greater than or equal to a tolerance value.

13. The control method according to claim 12, **characterized by** further comprising a step of:
when determining that tilting has occurred, triggering the AC motor to brake and/or triggering an anti-falling mechanism to perform an anti-falling action.

14. The control method according to claim 12, **characterized by** further comprising a step of:
when determining that a person has entered the vehicle hoisting device, triggering an anti-falling mechanism to perform an anti-falling action.

15. The control method according to claim 12, **characterized by** further comprising a parameter setting step for setting the tolerance value.
